# EUROPÄISCHE PATENTSCHRIFT

(11) **EP 2 787 405 B1**
(45) Veröffentlichungstag und Bekanntmachung des Hinweises auf die Patenterteilung: **19.07.2017**
(21) Anmeldenummer: 13162554.3
(22) Anmeldetag: 05.04.2013
(51) Int. Cl.: G05B 19/042, G05B 19/418, H02J 9/06

(54) **Verfahren zum Betrieb einer elektrischen Anlage und elektrische Anlage**
Method for operating an electrical installation and electrical installation
Procédé de fonctionnement d'une installation électrique et installation électrique

(43) Veröffentlichungstag der Anmeldung: 08.10.2014
(73) Patentinhaber: Siemens Aktiengesellschaft, 80333 München (DE)
(72) Erfinder: Allahut, Gerd Reinhard, 91171 Greding (DE); Schmidt, Hans-Klaus, 90579 Langenzenn (DE)

(56) Entgegenhaltungen:
- EP-A1- 1 223 656
- EP-A1- 1 266 755
- EP-A1- 2 099 113
- DE-A1- 10 121 323
- DE-A1- 10 151 119
- DE-A1-102008 009 907
- DE-B3-102005 029 656

## Beschreibung

Die Erfindung betrifft ein Verfahren zum Betrieb einer elektrischen Anlage mit einer Mehrzahl an elektrischen Verbrauchern, welche an eine Grundversorgungsspannung angeschlossen sind und bei Ausfall der Grundversorgungsspannung an eine Pufferspannung angeschlossen werden, um die Versorgung der elektrischen Verbraucher für eine Zeitdauer einer Pufferphase sicherzustellen, wobei die Pufferspannung mittels einer unterbrechungsfreien Stromversorgungseinheit bereitgestellt wird.

Des Weiteren betrifft die Erfindung eine elektrisch betriebene Anlage zur Durchführung des Verfahrens.

Aus der EP 1 223 656 A1 ist eine unterbrechungsfreie Stromversorgung für eine Rotationsdruckmaschine bekannt, bei welcher bei einer Störung in der Versorgungsspannung eine Steuerfolge auslösbar ist, gemäß der die Rotationsdruckmaschine in einen standardmäßig definierten Produktionshalt fahrbar ist.

Es ist Aufgabe der vorliegenden Erfindung die bekannte Vorrichtung dahingehend zu verbessern, dass auch mehrere Maschinen, also eine Mehrzahl von elektrischen Verbrauchern, im Falle eines Fehlens der Grundversorgungsspannung in einen sicheren Zustand gefahren werden können. Bei der elektrischen Anlage nach EP 1 223 656 A1 gibt es nur einen elektrischen Verbraucher, nämlich die Rotationsdruckmaschine, welcher in direkter Verbindung mit der unterbrechungsfreien Stromversorgung steht.

Bei einer elektrischen Anlage mit einer Mehrzahl von elektrischen Verbrauchern, welche durchaus dezentral in einem industriellen Prozess angeordnet sein können, ist es von Nachteil, dass der einzelne elektrische Verbraucher bei einem Fehlen der Grundversorgungsspannung sich nicht auf die bevorstehende Abschaltung vorbereiten kann. Es drohen dadurch Datenverluste, undefinierte Anlagenzustände sowie Schäden an Werkstücken und der Anlage, da durch eine unkoordinierte Abschaltung ein im Lauf befindlicher Prozess/Teilprozess abrupt unterbrochen wird.

Die DE 101 21 323 A1 zeigt ein Verfahren zum kontrollierten Abschalten einer elektrischen Anlage. Als Verbraucher ist eine Antriebseinheit über eine Netzüberwachung an ein Versorgungsnetz geschaltet. Sobald die Qualität des Versorgungsnetzes nicht mehr den Anforderungen der Antriebseinheit genügt, erfolgt eine Meldung der Netzüberwachung an einen Antriebsregler mit Leitfunktionalität, um einen geordneten Antriebsstillstand einzuleiten. Zur Durchführung des Abschaltvorgangs wird die in Energiespeichern der Antriebseinheit gespeicherte Energie genutzt.

Die EP 1 223 656 A1 beschreibt ein Verfahren zum Betreiben einer Rotationsdruckmaschine. Diese wird von einer Unterbrechungsfreien Stromversorgung (USV) gespeist, die eingangsseitig an ein Versorgungsnetz angeschlossen ist. Über einen Datenbus steht die Rotationsdruckmaschine mit der USV in Verbindung. Sobald eine Netzstörung auftritt, stellt die USV weiterhin die Versorgung der Rotationsdruckmaschine sicher und übermittelt dieser ein entsprechendes Störungssignal via Datenbus. Auf das Störungssignal reagiert die Rotationsdruckmaschine mit einem definierten Produktionshalt oder mit einem Stand-by-Betrieb, wobei einzelne Verbraucher abgeschaltet werden.

Aus der EP 2 099 113 A1 ist eine Verfahren zum Betreiben einer materialführenden Maschine bekannt. Die Versorgung der Antriebe erfolgt über einen Gleichspannungszwischenkreis, der über Gleichrichter aus einem elektrischen Netz gespeist wird. Bei einer Netzstörung wird die Maschine vom Versorgungsnetz getrennt und ein Inselnetz aufgebaut, welches einerseits aus der umgewandelten kinetischen Energie der Antriebe und andererseits aus einem Energiespeicher im Zwischenkreis gespeist wird. Damit ist ein kontrolliertes Stillsetzen der Maschine möglich.

Die EP 1 266 755 A1 beschreibt ein Verfahren zum Betreiben einer elektrischen Presse mit mehreren Antrieben. Diese sind über einen Zwischenkreis, einen gesteuerten Gleichrichter, einen Schalter und eine Netzüberwachung an ein Versorgungsnetz angeschlossen. Die Ansteuerung der Antriebe erfolgt mittels einer Basiskontrolleinheit und einer Steuerkontrolleinheit. Beide sind über eine jeweilige Unterbrechungsfreie Stromversorgung an dasselbe Versorgungsnetz oder an ein anderes Netz angeschlossen. Im Falle einer Netzstörung wird mittels der USVs die Ansteuerung weiter versorgt, um einen Abbremsvorgang einzuleiten. Die Antriebe speisen dabei Energie in den Zwischenkreis zurück.

Aus der DE 10 2008 009 907 A1 ist ein Verfahren zum Betreiben einer Druckmaschine mit internen Gleichspannungsnetzen bekannt. Diese werden im Normalbetrieb über ein Einspeisemodul aus einem Versorgungsnetz gespeist. Sobald eine Netzausfallerkennung einen Netzausfall erkennt, erfolgt eine Meldung an eine USV-Managementschaltung, welche mit einer USV verbunden ist. Wenn in den Antrieben genügend kinetische Energie vorhanden ist, wird diese bevorzugt zur Rückspeisung in die Gleichspannungsnetze genutzt, um Steuereinheiten weiter versorgen zu können. Falls diese kinetische Energie nicht ausreicht, schaltet die USV-Managementschaltung die Energiespeichereinrichtung der USV ein und die Antriebe werden weggeschaltet.

Diese Nachteile sollen mit der vorliegenden Erfindung behoben werden.

Die Aufgabe wird für das eingangs genannte Verfahren dadurch gelöst, dass die unterbrechungsfreie Stromversorgungseinheit zum Austausch von Daten über einen Feldbus an die Mehrzahl der elektrischen Verbraucher angeschlossen wird, die Mehrzahl der elektrischen Verbraucher jeweils mit einem Softwarebaustein versehen werden, welcher in die Kommunikation über den Feldbus eingebunden wird, der Softwarebaustein zumindest eines Verbrauchers als ein Master und die softwarebausteine der anderen Verbraucher als ein Slave im Sinne einer Master-Slave-Kommunikation eingestellt werden, der Master in der Stromversorgungseinheit als ein Kommunikationspartner für eine Durchführung eines geregelten Abschaltvorganges der elektrischen Verbraucher registriert wird, die Stromversorgungseinheit im Falle eines Fehlens der Grundversorgungsspannung dieses Fehlen über den Feldbus dem Master mitteilt und dadurch der geregelte Abschaltvorgang gestartet wird.

Mit einer über einen Feldbus kommunikationsfähigen, unterbrechungsfreien Stromversorgungseinheit für eine elektrische Anlage kann ein geregelter Abschaltvorgang mittels lokal in den elektrischen Verbrauchern installierten Softwarebausteinen realisiert werden. Über diese Softwarebausteine, welche in die Kommunikation über den Feldbus eingebunden sind, kann die unterbrechungsfreie Stromversorgungseinheit in einer elektrischen Anlage derart datentechnisch eingebunden werden, dass die elektrischen Verbraucher, beispielsweise Steuerungskomponenten, speicherprogrammierbare Steuerungen oder Leitsysteme, ein Auftreten des Fehlens der Grundversorgungsspannung rechtzeitig berücksichtigen können. Wechselt die unterbrechungsfreie Stromversorgungseinheit von einem Normalbetrieb in einen Betrieb, bei welchem eine Pufferspannung bereitgestellt wird, so kann die unterbrechungsfreie Stromversorgungseinheit diese Pufferspannung nur für eine gewisse Zeitdauer einer Pufferphase bereitstellen. Mit den in den elektrischen Verbrauchern installierten Softwarebausteinen und der Signalisierung des Fehlens der Grundversorgungsspannung durch die unterbrechungsfreie Stromversorgungseinheit können sich die elektrischen Verbraucher aufgrund des Wechsels der unterbrechungsfreien Stromversorgung von dem Normalbetrieb in den Pufferbetrieb frühzeitig auf eine bevorstehende Abschaltung vorbereiten.

In einer vorteilhaften Ausgestaltung wird der Softwarebaustein eines jeden Verbrauchers mit einer individuellen Abschaltsequenz parametriert. Da in der Regel jeder elektrische Verbraucher anders reagiert, mehr oder weniger Zeit für ein definiertes Herunterfahren benötigt, oder mehr oder weniger Energie benötigt, sind die Softwarebausteine in den einzelnen elektrischen Verbrauchern individuell auf die Bedürfnisse der elektrischen Verbraucher angepasst.

Eine weitere Optimierung des Verfahrens wird dadurch erreicht, dass der Master eine Teilnehmerliste zur Verfügung stellt und die Verbraucher mittels ihrer als Slave eingestellten Softwarebausteine in die Teilnehmerliste eingetragen werden. Vorteilhafterweise stellt der Master eine leere Teilnehmerliste zur Verfügung, alle Softwarebausteine, welche als Slave parametriert sind, melden sich bei dem Master mit ihren relevanten Informationen an, dabei wird die Teilnehmerliste mit Informationen über Adressen, Gerätetypen, Energieverbrauch, Zeitdauern usw., gefüllt.

Für ein optimales Ausnutzen einer Kapazität einer Stromversorgungseinheit bzw. einer Kapazität eines Batteriemoduls, welches in der Stromversorgungseinheit angeordnet ist, wird in der Stromversorgungseinheit eine Zeitspanne als eine Überbrückungszeitdauer hinterlegt, welche von dem Master abgefragt wird, wobei mit Beginn des Fehlens der Grundversorgungsspannung im Master gemessen wird, wie lange das Fehlen bereits andauert und für den Fall, dass das Fehlen länger als die Überbrückungszeitdauer andauert, sendet der Master an die Slaves einen Befehl, ihre jeweilige individuelle Abschaltsequenz zu starten. Im Sinne der Erfindung soll unter Überbrückungszeitdauer eine Zeitspanne verstanden werden, in der die Anlage regulär weiterarbeiten kann, obwohl die unterbrechungsfreie Stromversorgungseinheit im Pufferbetrieb ist. Dabei ist ein Energiegehalt des in der unterbrechungsfreien Stromversorgungseinheit befindlichen Batteriemoduls so bemessen, dass die Verbraucher noch eine bestimmte Zeitspanne, also die Überbrückungszeitdauer, bis zum Start der Abschaltphase sicher betrieben werden können. Dies hat den Vorteil, dass im Falle einer zwischenzeitlichen Spannungswiederkehr der Grundversorgungsspannung kein Abschaltvorgang eingeleitet werden muss. D.h., in diesem Falle arbeitet der einzelne elektrische Verbraucher weiter, als wäre "nichts" geschehen.

Vorteilhafterweise wird dem Master eine Überwachungsrolle übertragen. Demnach überwacht der Master die individuellen Abschaltsequenzen mittels der Teilnehmerliste und nach einem erfolgreichen Durchführen der individuellen Abschaltsequenzen startet der Master seine eigene Abschaltsequenz und teilt dies der Stromversorgungseinheit mit.

Nach Beendigung der Abschaltsequenz des Masters schaltet die Stromversorgungseinheit die Pufferspannung ab.

Als ein Abschaltkonzept oder ein Abschaltmanagement kann ein zeitgesteuerter Abschaltvorgang, ein Abschaltvorgang in Abhängigkeit einer Energie in einem Energiespeicher oder ein Abschaltvorgang in nacheinander ablaufenden Synchronisationsstufen gewählt werden. Somit hat ein Betreiber einer elektrischen Anlage die Möglichkeit, die Softwarebausteine mit ihren Abschaltsequenzen genau nach seinen Bedürfnissen zu parametrieren.

Insbesondere für den Betrieb einer elektrischen Anlage im Zusammenhang mit einer industriell automatisierten elektrischen Anlage werden als elektrische Verbraucher Geräte aus den Gruppen: Speicherprogrammierbare Steuerungen, Bedien- und Beobachtungssysteme, Industrie- oder Personal-Computer verwendet.

Die eingangs genannte Aufgabe wird ebenso durch eine elektrisch betriebene Anlage zur Durchführung des Verfahrens mit einer Mehrzahl an elektrischen Verbrauchern, welche an eine Grundversorgungsspannung angeschlossen sind, gelöst. Dabei ist eine unterbrechungsfreie Stromversorgungseinheit vorhanden, welche ausgestaltet ist, bei Ausfall der Grundversorgungsspannung eine Pufferspannung an die elektrischen Verbraucher anzuschalten, um die Versorgung der elektrischen Verbraucher für eine Zeitdauer einer Pufferphase sicherzustellen, wobei die Stromversorgungseinheit ausgestaltet ist, Daten über einen Feldbus mit der Mehrzahl der elektrischen Verbraucher auszutauschen, wobei die Mehrzahl der elektrischen Verbraucher jeweils einen Softwarebaustein aufweisen, welcher ausgestaltet ist, über den Feldbus zu kommunizieren, wobei der Softwarebaustein zumindest eines Verbrauchers als ein Master und die Softwarebausteine der anderen Verbraucher als ein Slave im Sinne einer Master-Slave-Kommunikation ausgestaltet sind. Die Stromversorgungseinheit ist dabei als ein Kommunikationspartner des Masters für eine Durchführung eines geregelten Abschaltvorganges der elektrischen Verbraucher ausgestaltet. Weiterhin ist die Stromversorgungseinheit ausgestaltet im Falle eines Fehlens der Grundversorgungsspannung dieses Fehlen über den Feldbus dem Master mitzuteilen.

Die elektrische Anlage oder nur ein Anlagenteil oder auch nur ein einzelner elektrischer Verbraucher kann sich mittels der Kommunikation von der Stromversorgungseinheit zum Master und der anschließenden Kommunikation vom Master zu den Softwarebausteinen optimal auf eine bevorstehende Abschaltung vorbereiten. D.h., wichtige Daten können vorab gesichert werden, ein begonnener Prozess/Teilprozess kann sauber zu Ende geführt werden bzw. ein neuer Prozess/Teilprozess wird vorsorglich erst gar nicht begonnen und die elektrische Anlage wird in eine vordefinierte Grundstellung gefahren und gesichert.

Dazu sind die Softwarebausteine eines jeden Verbrauchers mit einer individuellen Abschaltsequenz parametriert.

Um die individuellen Bedürfnisse eines jeden elektrischen Verbrauchers zu berücksichtigen, weist der Master eine Teilnehmerliste auf und die Verbraucher sind ausgestaltet, mittels ihrer als Slave eingestellten Softwarebausteine sich in die Teilnehmerliste einzutragen. Vorzugsweise werden in die Teilnehmerliste Informationen über Adressen, Gerätetypen, Energieverbrauch, Zeitdauern über ein Herunterfahren usw. eingetragen.

In einer weiteren Ausgestaltung der elektrischen Anlage ist in der Stromversorgungseinheit eine Zeitspanne als eine Überbrückungszeitdauer hinterlegt, wobei der Master ausgestaltet ist, die Überbrückungszeitdauer abzufragen und mit Beginn des Fehlens der Grundversorgungsspannung zu messen, wie lange das Fehlen bereits andauert und für den Fall, dass das Fehlen länger als die Überbrückungszeitdauer andauert, ist der Master ausgestaltet, an die Slaves einen Befehl zum Start ihrer jeweiligen individuellen Abschaltsequenz zu senden. Dies hat den Vorteil, dass ein elektrischer Verbraucher während der Überbrückungszeitdauer regulär weiterarbeiten kann, denn es könnte der Fall eintreten, dass zwischenzeitlich eine Spannungswiederkehr der Grundversorgungsspannung erfolgt. D.h., in diesem Fall arbeitet der einzelne elektrische Verbraucher weiter, als wäre "nichts" geschehen, denn die jeweiligen individuellen Abschaltsequenzen wurden noch nicht gestartet.

Um den Abschaltvorgang koordiniert im Sinne eines Abschaltmanagement durchzuführen, ist der Master ausgestaltet, die individuellen Abschaltsequenzen mittels der Teilnehmerliste zu überwachen und nach einem erfolgreichen Durchführen der individuellen Abschaltsequenzen seine eigene Abschaltsequenz zu starten und dies der Stromversorgungseinheit mitzuteilen.

Um einen Inbetriebsetzer die Arbeit und die Konfiguration an der elektrischen Anlage zu erleichtern, sind die Stromversorgungseinheit, die elektrischen Verbraucher und die Softwarebausteine derart ausgestaltet, dass sie über ein Softwarewerkzeug parametrierbar sind.

Die Zeichnung zeigt ein Ausführungsbeispiel, dabei zeigt die
- FIG 1: eine elektrische Anlage mit elektrischen Verbrauchern und einer unterbrechungsfreien Stromversorgungseinheit, wobei die elektrischen Verbraucher mit einem Softwarebaustein versehen sind und die
- FIG 2: die elektrische Anlage aus FIG 1, wobei ein elektrischer Verbraucher zusätzlich einen als Master ausgestalteten Softwarebaustein aufweist.

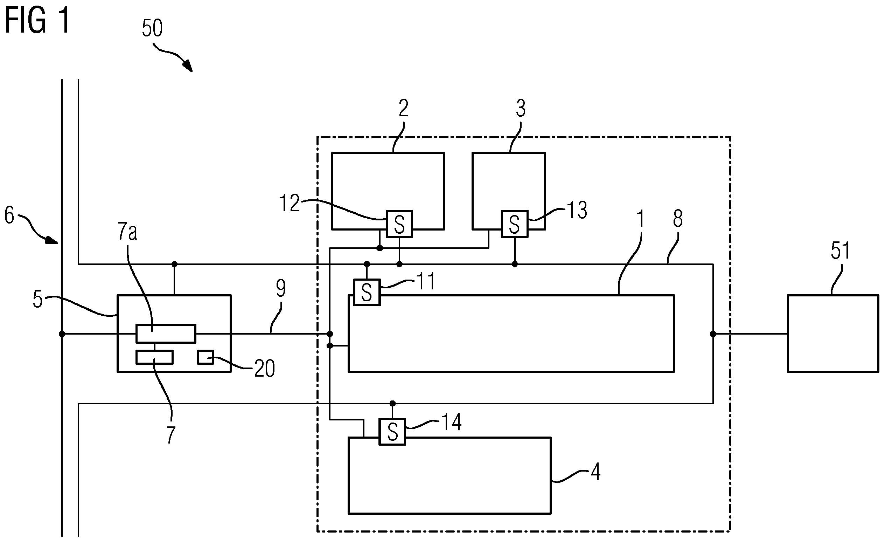

Gemäß FIG 1 ist eine elektrisch betriebene Anlage 50 mit einer Mehrzahl an elektrischen Verbrauchern 1 bis 4 dargestellt. Ein erster Verbraucher 1 ist als ein Industrie-PC mit einer Prozesssteuerungssoftware, einem Archiv, einem Lizenzbaustein und einem Wordprogramm ausgestaltet, ein zweiter Verbraucher 2 ist als ein Industrie-HMI-Panel zum Bedienen und Beobachten eines Prozesses ausgestaltet, ein dritter Verbraucher 3 ist als eine speicherprogrammierbare Steuerung zum Steuern eines Teilprozesses ausgestaltet und ein vierter Verbraucher 4 ist als ein Leitsystem Industrie-PC mit einem Bedien- und Beobachtungsprogramm und einer softwaregestützten speicherprogrammierbaren Steuerung ausgestaltet.

Die Verbraucher 1 bis 4 sind über eine Spannungsversorgungsleitung 9 an eine unterbrechungsfreie Stromversorgungseinheit 5 angeschlossen. Die unterbrechungsfreie Stromversorgungseinheit 5 erhält über eine 24 V-Zuleitung eine Grundversorgungsspannung 6. Diese Grundversorgungsspannung 6 schaltet sie in einem Normalbetrieb über eine Umschaltvorrichtung 7a an die elektrischen Verbraucher 1 bis 4. Für den Fall eines Ausfalles der Grundversorgungsspannung 6 ist die unterbrechungsfreie Stromversorgungseinheit 5 dazu ausgestaltet, mittels der Umschaltvorrichtung 7a auf ein Batteriemodul mit einer Pufferspannung 7 umzuschalten und die elektrischen Verbraucher 1 bis 4 über die Spannungsversorgungsleitung 9 mit der Pufferspannung 7 zu versorgen.

Demnach wird bei Ausfall der Grundversorgungsspannung 6 die Pufferspannung 7 an die elektrischen Verbraucher 1 bis 4 angeschaltet, um die Versorgung der elektrischen Verbraucher für eine Zeitdauer einer Pufferphase sicherzustellen.

Abhängig von der Kapazität des Batteriemoduls der unterbrechungsfreien Stromversorgungseinheit 5 und den Verbrauchswerten der elektrischen Verbraucher kann eine Überbrückungszeitdauer 20 im Bereich von 20 Sekunden bis einigen Minuten dauern. D.h., während der Überbrückungszeitdauer 20 können die elektrischen Verbraucher regulär weiterarbeiten, obwohl Pufferbetrieb herrscht. Sollte innerhalb der Überbrückungszeitdauer 20 die Grundversorgungsspannung 6 nicht wiederkehren, so wird mittels in den elektrischen Verbrauchern 1 bis 4 installierten Softwarebausteinen 11 bis 14 ein kontrollierter Abschaltvorgang der einzelnen elektrischen Verbraucher 1 bis 4 gestartet. Dazu weist der erste Verbraucher 1 einen ersten Softwarebaustein 11, der zweite Verbraucher 2 einen zweiten Softwarebaustein 12, der dritte Verbraucher 3 einen dritten Softwarebaustein 13 und der vierte Verbraucher 4 einen vierten Softwarebaustein 14 auf.

Die Softwarebausteine 11 bis 14 sind bezüglich ihrer Verbraucher 1 bis 4 mit einer individuellen Abschaltsequenz parametriert. Diese Parametrierung kann durch ein ebenfalls an den Feldbus 8 angeschlossenes Softwarewerkzeug 51 erfolgen.

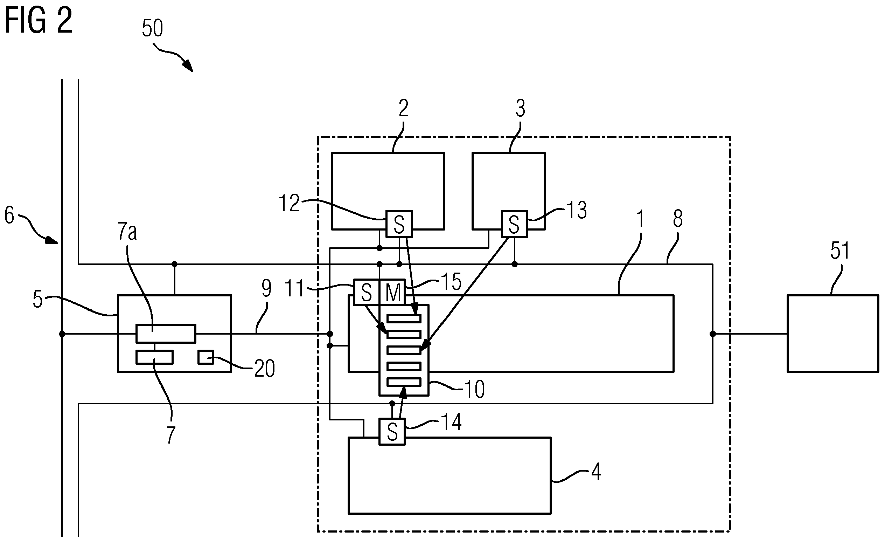

Gemäß der FIG 2 erhält ein spezieller elektrischer Verbraucher, nämlich der erste Verbraucher 1, zusätzlich oder in Kombination einen besonderen Softwarebaustein, nämlich einen fünften Softwarebaustein 15, welcher als ein Master M im Sinne einer Master-Slave-Kommunikation ausgestaltet ist, dabei sind die Softwarebausteine 11 bis 14 als ein Slave S zu dem Master M ausgestaltet.

Der Master M weist eine Teilnehmerliste 10 auf, wobei die Verbraucher 1 bis 4 mittels ihrer als Slave S eingestellten Softwarebausteine 11 bis 14 ausgestaltet sind, sich in die Teilnehmerliste 10 einzutragen. Der Master M ist ausgestaltet, einen Datenverkehr zwischen der unterbrechungsfreien Stromversorgungseinheit 5 und eben sich selber durchzuführen. Demnach ist der Master M in der Lage, Daten der unterbrechungsfreien Stromversorgungseinheit 5 anzufragen bzw. entgegenzunehmen und diese zu verarbeiten. In der Master-Slave-Kommunikationskonfiguration der elektrischen Anlage 50 steuert der Master M die Softwarebausteine 11 bis 14 in den Verbrauchern 1 bis 4.

In der unterbrechungsfreien Stromversorgungseinheit 5 ist die Überbrückungszeitdauer 20 hinterlegt, dabei ist der Master M ausgestaltet, die Überbrückungszeitdauer 20 abzufragen und zusätzlich ausgestaltet, mit Beginn des Fehlens der Grundversorgungsspannung 6, welches er durch ein Signal der unterbrechungsfreien Stromversorgungseinheit 5 mitgeteilt bekommt, zu messen, wie lange das Fehlen bereits andauert und für den Fall, dass das Fehlen länger als die Überbrückungszeitdauer andauert, ist der Master ausgestaltet, an die Slaves S einen Befehl zum Start ihrer jeweiligen individuellen Abschaltsequenz zu senden.

Um den Abschaltvorgang koordiniert im Sinne eines Abschaltmanagements durchzuführen, ist der Master ausgestaltet, die individuellen Abschaltsequenzen mittels der Teilnehmerliste 10 zu überwachen und nach einem erfolgreichen Durchführen der individuellen Abschaltsequenzen seine eigene Abschaltsequenz zu starten, diese ist wiederum in dem ersten Softwarebaustein 11 zusätzlich zu dem Master M implementiert, wobei der Master den Start seiner eigenen Abschaltsequenz wiederum der unterbrechungsfreien Stromversorgungseinheit 5 mitteilt, welche dann nach Beendigung der Abschaltsequenz des ersten Softwarebausteins 11 die Pufferspannung abschaltet. Nach diesem koordinierten Herunterfahren aller elektrischer Verbraucher 1 bis 4 befindet sich die elektrische Anlage 50 in einem definierten, sicheren Zustand.

Das Verfahren bzw. die Softwarebausteine 11 bis 14 sind dahingehend ausgelegt bzw. parametrierbar, dass für den Abschaltvorgang ein zeitgesteuertes Abschalten, ein energiegesteuertes Abschalten oder ein Abschalten nach Synchronisationsstufen gewählt werden kann. Für ein Szenario eines zeitgesteuerten Abschaltvorganges können beispielsweise drei Fälle gewählt werden:
1. Die Funktionalität der unterbrechungsfreien Stromversorgungseinheit 5 wird nur dafür verwendet, um im Falle einer instabilen Grundversorgungsspannung 6 die elektrischen Verbraucher 1 bis 4 sofort bzw. nach wenigen Sekunden herunterzufahren.
2. Ein Energiegehalt eines ausgewählten Batteriemoduls ist so bemessen, dass eine Überbrückungszeitdauer 20 bis zum Start einer Abschaltphase für die elektrischen Verbraucher 1 bis 4 genutzt werden kann, was bedeutet, die elektrischen Verbraucher können während dieser Überbrückungszeitdauer bzw. Überbrückungsphase regulär weiterarbeiten und erst danach soll der Abschaltvorgang eingeleitet werden.
3. Die Zeitdauer der Überbrückungszeitdauer 20 wird für den regulären Betrieb der elektrischen Anlage 50 genutzt und im Falle einer zwischenzeitlichen Spannungswiederkehr der Grundversorgungsspannung 6 wird keine Abschaltphase bzw. kein Abschaltvorgang eingeleitet. D.h., in diesem Falle arbeitet die elektrische Anlage 50 weiter, als wäre "nichts" geschehen.

Verfolgt ein Betreiber der elektrischen Anlage 50 das Ziel, einen elektrischen Verbraucher 1 bis 4 gegen den Ausfall der Grundversorgungsspannung 6 abzusichern, so wählt er als eine Strategie für das Abschaltmanagement bzw. für den Abschaltvorgang das zeitgesteuerte Abschalten.

Wird z.B. der dritte Fall gewählt, so muss der Betreiber der elektrischen Anlage 50 wissen, wie lange ein einzelner elektrischer Verbraucher 1 bis 4 nach Wegfall der Grundversorgungsspannung 6 regulär weiterarbeiten soll bzw. regulär weiterarbeiten kann. Diese Wahl hat er in der Hoffnung getroffen, dass in dieser Überbrückungsphase eine Spannungswiederkehr der Grundversorgungsspannung 6 eintritt bzw. wiederhergestellt werden kann. Das Herunterfahren eines einzelnen elektrischen Verbrauchers 1 bis 4 will er wirklich nur dann, wenn die Zeitspanne bis zum Start des Abschaltvorganges verstrichen ist und eine Spannungswiederkehr der Grundversorgungsspannung 6 ausgeblieben ist. Demnach muss er für jeden elektrischen Verbraucher die Zeitspanne der Abschaltphase ermitteln. Der größte gefundene Wert ist hierbei maßgebend. Mit den ermittelten Zeitspannen für die Überbrückungs- und Abschaltphase sowie den Energieverbrauchswerten für diese Phasen, ermittelt er für den einzelnen elektrischen Verbraucher bzw. für die Summe der elektrischen Verbraucher die passende Energiespeicherkonfiguration eines Batteriemoduls der unterbrechungsfreien Stromversorgungseinheit 5.

Die unterbrechungsfreie Stromversorgungseinheit 5 hat dabei die Aufgabe, den Master M als einen Kommunikationspartner für das Abschaltmanagement zu registrieren und das Fehlen der Grundversorgungsspannung 6 in Richtung des Masters M über beispielsweise ein Ethernet als Feldbus dem Master M zu signalisieren. Weiterhin hat die unterbrechungsfreie Stromversorgungseinheit 5 die Aufgabe, den elektrischen Verbraucher, in welchem der Softwarebaustein als Master M implementiert ist, zu überwachen. Dies wird von der unterbrechungsfreien Stromversorgungseinheit 5 vorzugsweise über ein Ping durchgeführt.

Für den Anwendungsfall zeitgesteuerte Abschaltung wird der Master M, welcher sich nach seiner Installation auf genau einem elektrischen Verbraucher befindet, mit den ermittelten Zeitspannen für Übergangs- und Abschaltphase konfiguriert.

Die Softwarebausteine in Form eines Masters M können vorteilhafterweise in zwei Varianten vorliegen, nämlich für beispielsweise einen Microsoft-Windows-PC als eine Software-Applikation oder für beispielsweise eine speicherprogrammierbare Steuerung als ein Funktionsbaustein.

Die Softwarebausteine in ihrer Funktion als Slaves können ebenfalls als eine Microsoft-Windows-PC-Software-Applikation, als ein Funktionsbaustein für speicherprogrammierbare Steuerungen oder als eine Microsoft-Windows-CE-Software-Applikation, beispielsweise für HMI-Panels vorliegen.

Die Softwarebausteine sollen im Folgenden als Agenten bezeichnet werden und weisen vorteilhafterweise ein über das Softwarewerkzeug 51 bedienbares User-Interface auf.

Agenten, die auf einem PC-System oder auf einem HMI-Panel installiert sind, melden sich demnach einem Betreiber der elektrischen Anlage 50 als ein selbsterklärendes User-Interface an. Dabei wird zwischen einem User-Interface des Master-Agenten und einem User-Interface eines Slave-Agenten unterschieden.

Das User-Interface des Master-Agenten bietet eine Auswahlmöglichkeit zwischen dem zeit- und energiegesteuertem Abschalten an. Bei Auswahl der zeitgesteuerten Abschaltung bietet das User-Interface weitere Einstellmöglichkeiten, wie z.B. Zeitspanne bis zum Start der Abschaltphase, an. Bei Auswahl der energiegesteuerten Abschaltung bietet das User-Interface Eingabemöglichkeiten der Energiemenge an, die in der Abschaltphase vom Anlagenteil bzw. elektrischen Verbraucher verbraucht wird. Auch besteht die Auswahlmöglichkeit in dem User-Interface eine Unterteilung der Abschaltphasen in Synchronisationsstufen vorzunehmen. Eine Darstellung der Teilnehmerliste 10, welche vom Master-Agenten geführt wird, ist weiterhin in dem User-Interface vorgesehen. Dabei werden die von dem Slave-Agenten übertragenen Daten allerdings nur als "read-only" angezeigt.

Ein User-Interface der Slave-Agenten bietet eine Auswahl einer Datei (in der Regel .bat- oder .exe-Datei), die bei Beginn des Pufferbetriebs (gleich Beginn der Übergangsphase) auf dem elektrischen Verbraucher ausgeführt werden soll, an. Auch kann eine Datei ausgewählt werden, die bei Beginn der Abschaltphase auf dem elektrischen Verbraucher ausgeführt werden soll. Bei Auswahl der Option in dem User-Interface "Unterteilung der Abschaltphase in Synchronisationsstufen" wird eine editierbare, 16-zeilige Tabelle eingeblendet. Die 16 Zeilen symbolisieren die maximale Stufenanzahl. Der Betreiber der elektrischen Anlage kann in die einzelnen Zeilen Einträge über auszuführende Dateien und time outs vornehmen.

Für einen energiegesteuerten Abschaltvorgang werden zwei Fälle unterschieden:
1. Generell soll der Abschaltvorgang erst im allerletzten Augenblick eingeleitet werden, nämlich in dem Augenblick, wo der Energieinhalt des Batteriemoduls, der Energie entspricht, die die elektrischen Verbraucher benötigen, um sicher herunterzufahren. Je größer eine Kapazität des Batteriemoduls vom Anlagenbetreiber bemessen wird, umso länger kann die Übergangsphase ausfallen und umgekehrt. Die Übergangsphase kann für den regulären Weiterbetrieb der elektrischen Anlage genutzt werden.
2. Auch gibt es Anlagenbetreiber, die die Überbrückungsphase für den regulären Betrieb des gepufferten Anlagenteils nutzen wollen und im Falle einer zwischenzeitlichen Spannungswiederkehr keine Abschaltphase einleiten möchten.

Hat sich ein Betreiber für den zweiten Fall entschieden, also für den Fall, dass eine elektrische Anlage nach Wegfall der Grundversorgungsspannung 9 so lange wie möglich regulär weiterarbeiten soll - und zwar solange, wie es der Energiespeicher der unterbrechungsfreien Stromversorgungseinheit erlaubt, dann will er ein Herunterfahren der elektrischen Verbraucher wirklich nur dann, wenn die verbleibende Energie im Batteriemodul nur noch dafür ausreicht, um den einzelnen elektrischen Verbraucher zuverlässig herunterzufahren und eine Spannungswiederkehr der Grundversorgungsspannung 6 ausgeblieben ist. Dafür muss der Betreiber der elektrischen Anlage 50 im Vorfeld für jeden elektrischen Verbraucher den Energieverbrauch in der Abschaltphase ermitteln. Mit den ermittelten bzw. berechneten Werten findet er die Minimalgröße der Kapazität des Batteriemoduls, der für einen betrachteten Anlagenteil bzw. für die elektrische Anlage gerade noch ausreichend wäre, um diese sicher herunterzufahren.

## Patentansprüche

1. Verfahren zum Betrieb einer elektrischen Anlage (50) mit einer Mehrzahl an elektrischen Verbrauchern (1,2,3,4), welche an eine Grundversorgungsspannung (6) angeschlossen sind und bei Ausfall der Grundversorgungsspannung (6) an eine Pufferspannung (7) angeschlossen werden um die Versorgung der elektrischen Verbraucher (1,2,3,4) für eine Zeitdauer einer Pufferphase sicherzustellen, wobei die Pufferspannung (7) mittels einer unterbrechungsfreien Stromversorgungseinheit (5) bereitgestellt wird,
**dadurch gekennzeichnet, dass**
• die Stromversorgungseinheit (5) zum Austausch von Daten über einen Feldbus (8) an die Mehrzahl der elektrischen Verbraucher (1,2,3,4) angeschlossen wird,
• die Mehrzahl der elektrischen Verbrauchern (1,2,3,4) jeweils mit einem Softwarebaustein (11,...,15) versehen werden, welcher in die Kommunikation über den Feldbus (8) eingebunden wird,
• der Softwarebaustein (15) zumindest eines Verbrauchers (1) als ein Master (M) und die Softwarebausteine (11,..., 14) der anderen Verbraucher (2,3,4) als ein Slave (S) im Sinne einer Master-Slave Kommunikation eingestellt werden,
• der Master (M) in der Stromversorgungseinheit (5) als ein Kommunikationspartner für eine Durchführung eines geregelten Abschaltvorganges der elektrischen Verbraucher (1,2,3,4) registriert wird,
• die Stromversorgungseinheit (5) im Falle eines Fehlens der Grundversorgungsspannung (6) dieses Fehlen über den Feldbus (8) dem Master (M) mitteilt und dadurch der geregelte Abschaltvorgang gestartet wird.

2. Verfahren nach Anspruch 2, wobei der Softwarebaustein (11,...,14) eines jeden Verbrauchers (1,2,3,4) mit einer individuellen Abschaltsequenz parametriert wird.

3. Verfahren nach Anspruch 1 oder 2, wobei der Master (M) eine Teilnehmerliste (10) zur Verfügung stellt und die Verbraucher (1,2,3,4) mittels ihrer als Slave (S) eingestellten Softwarebausteine (11,...,14) in die Teilnehmerliste (10) eingetragen werden.

4. Verfahren nach einem der Ansprüche 2 oder 3, wobei in der Stromversorgungseinheit (5) eine Zeitspanne als eine Überbrückungszeitdauer (20) hinterlegt wird, welche von dem Master (M) abgefragt wird, wobei mit Beginn des Fehlens der Grundversorgungsspannung (6) im Master (M) gemessen wird, wie lange das Fehlen bereits andauert und für den Fall, dass das Fehlen länger als die Überbrückungszeitdauer (20) andauert sendet der Master (M) an die Slaves (S) einen Befehl ihre jeweilige individuelle Abschaltsequenz zu starten.

5. Verfahren nach einem der Ansprüche 2 bis 4, wobei der Master (M) die individuellen Abschaltsequenzen mittels der Teilnehmerliste (10) überwacht und nach einem erfolgreichen durchführen der individuellen Abschaltsequenzen seine eigene Abschaltsequenz startet und dies der Stromversorgungseinheit (5) mitteilt.

6. Verfahren nach Anspruch 5, wobei die Stromversorgungseinheit (5) nach Beendigung der Abschaltsequenz des Masters (M) die Pufferspannung (7) abschaltet.

7. Verfahren nach einem der vorhergehenden Ansprüche, wobei als Abschaltvorgang ein zeitgesteuerter Abschaltvorgang, ein Abschaltvorgang in Abhängigkeit einer Energie in einem Energiespeicher oder ein Abschaltvorgang in nacheinander ablaufenden Synchronisationsstufen gewählt wird.

8. Verfahren nach einem der vorhergehenden Ansprüche, wobei als elektrische Verbraucher (1,2,3,4) Geräte aus den Gruppen: Speicherprogrammierbare Steuerungen, Bedien- und Beobachtungssysteme, Industrie- oder Personal-Computer verwendet werden.

9. Elektrisch betriebene Anlage (50) zur Durchführung des Verfahrens nach einem der Ansprüche 1 bis 8 mit einer Mehrzahl an elektrischen Verbrauchern (1,2,3,4), welche an eine Grundversorgungsspannung (6) angeschlossen sind, mit einer unterbrechungsfreien Stromversorgungseinheit (5), welche ausgestaltet ist bei Ausfall der Grundversorgungsspannung (6) eine Pufferspannung (7) an die elektrischen Verbraucher (1,2,3,4) anzuschalten um die Versorgung der elektrischen Verbraucher (1,2,3,4) für eine Zeitdauer einer Pufferphase sicherzustellen,
**dadurch gekennzeichnet, dass**
• die Stromversorgungseinheit (5) ausgestaltet ist Daten über einen Feldbus (8) mit der Mehrzahl der elektrischen Verbraucher (1,2,3,4) auszutauschen,
• die Mehrzahl der elektrischen Verbrauchern (1,2,3,4) jeweils einen Softwarebaustein (11,...,14) aufweisen, welcher ausgestaltet ist über den Feldbus (8) zu kommunizieren,
• der Softwarebaustein (15) zumindest eines Verbrauchers (1) als ein Master (M) und die Softwarebausteine (11,..., 14) der anderen Verbraucher (1,2,3,4) als ein Slave (S) im Sinne einer Master-Slave Kommunikation ausgestaltet sind,
• die Stromversorgungseinheit (5) als ein Kommunikationspartner des Masters (M) für eine Durchführung eines geregelten Abschaltvorganges der elektrischen Verbraucher (1,2,3,4) ausgestaltet ist,
• die Stromversorgungseinheit (5) ausgestaltet ist im Falle eines Fehlens der Grundversorgungsspannung (6) dieses Fehlen über den Feldbus (8) dem Master (M) mit zu teilen.

10. Elektrisch betriebene Anlage (50) nach Anspruch 9, wobei der Softwarebaustein (11,...,14) eines jeden Verbrauchers (1,2,3,4) mit einer individuellen Abschaltsequenz parametriert ist.

11. Elektrisch betriebene Anlage (50) nach Anspruch 9 oder 10, wobei der Master (M) eine Teilnehmerliste (10) aufweist und die Verbraucher (1,2,3,4) mittels ihrer als Slave (S) eingestellten Softwarebausteine (11,...,14) ausgestaltet sind sich in die Teilnehmerliste (10) ein zu tragen.

12. Elektrisch betriebene Anlage (50) nach einem der Ansprüche 9 bis 11 , wobei in der Stromversorgungseinheit (5) eine Zeitspanne als eine Überbrückungszeitdauer (20) hinterlegt ist, wobei der Master (M) ausgestaltet ist die Überbrückungszeitdauer (20) ab zu fragen und mit Beginn des Fehlens der Grundversorgungsspannung (6) zu messen, wie lange das Fehlen bereits andauert und für den Fall, dass das Fehlen länger als die Überbrückungszeitdauer (20) andauert, ist der Master (M) ausgestaltet an die Slaves (S) einen Befehl zum Start ihrer jeweiligen individuelle Abschaltsequenz zu senden.

13. Elektrisch betriebene Anlage (50) nach einem der Ansprüche 10 bis 12, wobei der Master (M) ausgestaltet ist die individuellen Abschaltsequenzen mittels der Teilnehmerliste (10) zu überwachen und nach einem erfolgreichen durchführen der individuellen Abschaltsequenzen seine eigene Abschaltsequenz zu starten und dies der Stromversorgungseinheit (5) mit zu teilen.

14. Elektrisch betriebene Anlage (50) nach einem der Ansprüche 9 bis 13, wobei die Stromversorgungseinheit (5), die elektrischen Verbraucher (1,2,3,4) und die Softwarebausteine (11,...,15) derart ausgestaltet sind, dass sie über ein Softwarewerkzeug (51) parametrierbar sind.

## Claims

1. Method for operating an electrical installation (50) having a plurality of electrical loads (1, 2, 3, 4), which are connected to a basic supply voltage (6) and upon failure of the basic supply voltage (6) are connected to a buffer voltage (7) in order to safeguard the supply to the electrical loads (1, 2, 3, 4) for a period of a buffer phase, wherein the buffer voltage (7) is provided by means of an interruption-free power supply unit (5),
**characterised in that**
• the power supply unit (5) is connected to the plurality of electrical loads (1, 2, 3, 4) in order to exchange data via a field bus (8),
• the plurality of electrical loads (1, 2, 3, 4) are each provided with a software module (11, ..., 15), which is included in the communication via the field bus (8),
• the software module (15) of at least one load (1) and the software modules (11, ..., 14) of the other loads (2, 3, 4) is/are set as a master (M) and as a slave (S) respectively within the meaning of a master-slave communication,
• the master (M) in the power supply unit (5) is registered as a communication partner for realising a regulated cut-off process of the electrical loads (1, 2, 3, 4),
• in the event of a fault in the basic supply voltage (6) the power supply unit (5) communicates this fault via the field bus (8) to the master (M) and the regulated cut-off process is started as a result.

2. Method according to claim 2, wherein the software module (11, ..., 14) of each load (1, 2, 3, 4) is parameterised with an individual cut-off sequence.

3. Method according to claim 1 or 2, wherein a subscriber list (10) is available to the master (M) and the loads (1, 2, 3, 4) are recorded in the subscriber list (10) by means of their software modules (11, ..., 14) set as a slave (S).

4. Method according to one of claims 2 or 3, wherein a time interval is stored in the power supply unit (5) as a transitory period (20), which is retrieved by the master (M), wherein at the start of the fault in the basic supply voltage (6) a measurement is taken in the master (M) to determine how long the fault has already existed and in the event that the fault has existed for longer than the transitory period (20), the master (M) sends a command to the slaves (S) to start their respective individual cut-off sequence.

5. Method according to one of claims 2 to 4, wherein the master (M) monitors the individual cut-off sequences using the subscriber list (10) and following a successful realisation of the individual cut-off sequences starts its own cut-off sequence and communicates this to the power supply unit (5).

6. Method according to claim 5, wherein the power supply unit (5) cuts off the buffer voltage (7) after the cut-off sequence of the master (M) has been terminated.

7. Method according to one of the preceding claims, wherein a time-controlled cut-off process, a cut-off process as a function of energy in an energy store or a cut-off process in synchronisation stages that run consecutively is selected as a cut-off process.

8. Method according to one of the preceding claims, wherein devices from the groups: programmable logic controllers, control and monitoring systems, industrial or personal computers are used as electrical loads (1, 2, 3, 4).

9. Electrically operated installation (50) for realising the method according to one of claims 1 to 8 having a plurality of electrical loads (1, 2, 3, 4), which are connected to a basic power supply (6), having an interruption-free power supply unit (5), which, upon failure of the basic supply voltage (6), is configured to switch on a buffer voltage (7) on the electrical loads (1, 2, 3, 4) in order to safeguard the supply to the electrical loads (1, 2, 3, 4) for a period of a buffer phase,
**characterised in that**
• the power supply unit (5) is configured to exchange data via a field bus (8) with the plurality of electrical loads (1, 2, 3, 4),
• the plurality of electrical loads (1, 2, 3, 4) each have a software module (11, ..., 14), which is configured to communicate via the field bus (8),
• the software module (15) of at least one load (1) and the software modules (11, ..., 14) of the other loads (2, 3, 4) is/are configured as a master (M) and as a slave (S) respectively within the meaning of a master-slave communication,
• the power supply unit (5) as a communication partner of the master (M) is configured for a realisation of a regulated cut-off process of the electrical loads (1, 2, 3, 4),
• in the event of a fault in the basic supply voltage (6) the power supply unit (5) is configured to communicate this fault via the field bus (8) to the master (M).

10. Electrically operated installation (50) according to claim 9, wherein the software module (11, ..., 14) of each load (1, 2, 3, 4) is parameterised with an individual cut-off sequence.

11. Electrically operated installation (50) according to claim 9 or 10, wherein the master (M) has a subscriber list (10) and the loads (1, 2, 3, 4) are configured by means of their software modules (11, ..., 14) set as slaves (S) to record themselves in the subscriber list (10).

12. Electrically operated installation (50) according to one of claims 9 to 11, wherein a time interval is stored in the power supply unit (5) as a transitory period (20), wherein the master (M) is configured to retrieve the transitory period (20) and at the start of the fault in the basic supply voltage (6) to measure how long the fault has already existed and in the event that the fault has existed for longer than the transitory period (20) the master (M) is configured to send a command to the slaves (S) to start their respective individual cut-off sequence.

13. Electrically operated installation (50) according to one of claims 10 to 12, wherein the master (M) is configured to monitor the individual cut-off sequences by means of the subscriber list (10) and following a successful realisation of the individual cut-off sequences to start its own cut-off sequence and to communicate this to the power supply unit (5).

14. Electrically operated installation (50) according to one of claims 9 to 13, wherein the power supply unit (5), the electrical loads (1, 2, 3, 4) and the software modules (11, ..., 15) are configured such that they can be parameterised by way of a software tool (51).

## Revendications

1. Procédé destiné à l'exploitation d'une installation électrique (50) avec une pluralité de consommateurs électriques (1, 2, 3, 4), qui sont raccordés à une tension d'alimentation de base (6) et sont raccordés à une tension tampon (7) en cas de défaillance de la tension d'alimentation de base (6) afin de garantir l'alimentation des consommateurs électriques (1, 2, 3, 4) pour une durée d'une phase tampon, dans lequel la tension tampon (7) est mise à disposition au moyen d'une unité d'alimentation électrique sans interruption (5), **caractérisé en ce que**
• l'unité d'alimentation électrique (5) est raccordée à la pluralité des consommateurs électriques (1, 2, 3, 4) par l'intermédiaire d'un bus de terrain (8) en vue d'un échange de données,
• la pluralité de consommateurs électriques (1, 2, 3, 4) sont prévus respectivement avec un composant logiciel (11, ..., 15), lequel est intégré dans la communication par l'intermédiaire du bus de terrain (8),
• le composant logiciel (15) d'au moins un consommateur (1) est réglé en tant que maître (M) et les composants logiciels (11, ..., 14) des autres consommateurs (2, 3, 4) sont réglés en tant qu'esclave (S) dans le sens d'une communication maître-esclave,
• le maître (M) dans l'unité d'alimentation électrique (5) est enregistré en tant que partenaire de communication pour la réalisation d'un processus de mise hors tension réglé des consommateurs électriques (1, 2, 3, 4),
• l'unité d'alimentation électrique (5) en cas d'insuffisance de la tension d'alimentation de base (6) communique cette insuffisance par l'intermédiaire du bus de terrain (8) au maître (M) et de ce fait le processus de mise hors tension réglé est lancé.

2. Procédé selon la revendication 2, dans lequel le composant logiciel (11, ..., 14) de chaque consommateur (1, 2, 3, 4) est paramétré avec une séquence de mise hors tension individuelle.

3. Procédé selon la revendication 1 ou 2, dans lequel le maître (M) met à disposition une liste de participants (10) et les consommateurs (1, 2, 3, 4) sont enregistrés dans la liste de participants (10) au moyen de leurs composants logiciels (11, ..., 14) réglés en tant qu'esclave (S).

4. Procédé selon l'une des revendications 2 ou 3, dans lequel dans l'unité d'alimentation électrique (5) un intervalle de temps est enregistré en tant que durée de court-circuit (20), qui est interrogée par le maître (M), dans lequel au début de l'insuffisance de la tension d'alimentation de base (6) on mesure dans le maître (M) combien de temps l'insuffisance a déjà duré et dans le cas où l'insuffisance dure plus longtemps que la durée de court-circuit (20) le maître (M) envoie aux esclaves (S) un ordre pour lancer leur séquence de mise hors tension individuelle respective.

5. Procédé selon l'une des revendications 2 à 4, dans lequel le maître (M) surveille les séquences de mise hors tension individuelles au moyen de la liste de participants (10) et après une réalisation réussie des séquences de mise hors tension individuelles lance sa propre séquence de mise hors tension et la communique à l'unité d'alimentation électrique (5).

6. Procédé selon la revendication 5, dans lequel l'unité d'alimentation électrique (5) coupe la tension tampon (7) après la fin de la séquence de mise hors tension du maître (M).

7. Procédé selon l'une des revendications précédentes, dans lequel en tant que processus de mise hors tension un processus de mise hors tension à commande temporelle, un processus de mise hors tension en fonction d'une énergie dans un accumulateur ou un processus de mise hors tension dans des étapes de synchronisation se déroulant les unes à la suite des autres est choisi.

8. Procédé selon l'une des revendications précédentes, dans lequel en tant que consommateurs électriques (1, 2, 3, 4) sont utilisés des appareils sélectionnés dans les groupes : commandes par programme enregistré, systèmes de manipulation et d'observation, ordinateurs industriels ou individuels.

9. Installation fonctionnant à l'électricité (50) destinée à la réalisation du procédé selon l'une des revendications 1 à 8 avec une pluralité de consommateurs électriques (1, 2, 3, 4), qui sont raccordés à une tension d'alimentation de base (6), avec une unité d'alimentation électrique sans interruption (5), qui est conçue en cas de défaillance de la tension d'alimentation de base (6) pour mettre en marche les consommateurs électriques (1, 2, 3, 4) avec une tension tampon (7) pour garantir l'alimentation des consommateurs électriques (1, 2, 3, 4) pendant une durée d'une phase tampon, **caractérisée en ce que**
• l'unité d'alimentation électrique (5) est conçue pour échanger des données par l'intermédiaire d'un bus de terrain (8) avec la pluralité des consommateurs électriques (1, 2, 3, 4),
• la pluralité des consommateurs électriques (1, 2, 3, 4) présentent respectivement un composant logiciel (11, ..., 14), qui est conçu pour communiquer par l'intermédiaire du bus de terrain (8),
• le composant logiciel (15) d'au moins un consommateur (1) est conçu en tant que maître (M) et les composants logiciels (11, ..., 14) des autres consommateurs (1, 2, 3, 4) sont conçus en tant qu'esclave (S) dans le sens d'une communication maître-esclave,
• l'unité d'alimentation électrique (5) est conçue en tant que partenaire de communication du maître (M) pour la réalisation d'un processus de mise hors tension réglé des consommateurs électriques (1, 2, 3, 4),
• l'unité d'alimentation électrique (5) est conçue en cas d'insuffisance de la tension d'alimentation de base (6) pour communiquer cette insuffisance au maître (M) par l'intermédiaire du bus de terrain (8).

10. Installation fonctionnant à l'électricité (50) selon la revendication 9, dans laquelle le composant logiciel (11, ..., 14) de chaque consommateur (1, 2, 3, 4) est paramétré avec une séquence de mise hors tension individuelle.

11. Installation fonctionnant à l'électricité (50) selon la revendication 9 ou 10, dans laquelle le maître (M) présente une liste de participants (10) et les consommateurs (1, 2, 3, 4) sont conçus pour s'enregistrer dans la liste de participants (10) au moyen de leurs composants logiciels (11, .., 14) réglés en tant qu'esclave (S).

12. Installation fonctionnant à l'électricité (50) selon l'une des revendications 9 à 11, dans laquelle un intervalle de temps est enregistré dans l'unité d'alimentation électrique (5) en tant que durée de court-circuit (20), dans laquelle le maître (M) est conçu pour interroger la durée de court-circuit (20) et mesurer au début de l'insuffisance de la tension d'alimentation de base (6) combien de temps l'insuffisance a déjà duré et dans le cas où l'insuffisance a duré plus longtemps que la durée de court-circuit (20), le maître (M) est conçu pour envoyer aux esclaves (S) un ordre pour qu'ils lancent leur séquence de mise hors tension individuelle respective.

13. Installation fonctionnant à l'électricité (50) selon l'une des revendications 10 à 12, dans laquelle le maître (M) est conçu pour surveiller les séquences de mise hors tension individuelles au moyen de la liste de participants (10) et pour lancer après une réalisation réussie des séquences de mise hors tension individuelles sa propre séquence de mise hors tension et la communiquer à l'unité d'alimentation électrique (5).

14. Installation fonctionnant à l'électricité (50) selon l'une des revendications 9 à 13, dans laquelle l'unité d'alimentation électrique (5), les consommateurs électriques (1, 2, 3, 4) et les composants logiciels (11, ..., 15) sont conçus de telle sorte qu'ils peuvent être paramétrés par l'intermédiaire d'un outil logiciel (51).
